# EUROPEAN PATENT SPECIFICATION

(11) **EP 1 669 704 B1**
(45) Date of publication and mention of the grant of the patent: **08.11.2017**
(21) Application number: 06004390.8
(22) Date of filing: 30.11.2001
(51) Int. Cl.: F25B 45/00, F25B 43/02, B01D 17/02, B01D 17/00, F25B 31/00

(54) **Refrigeration cycle system, and method of operating the same**
Kühlmittelkreislaufsystem und Verfahren zu dessen Betrieb
Système à cycle de réfrigération et méthode pour son fonctionnement

(30) Priority: 15.12.2000 JP 2000382887
(43) Date of publication of application: 14.06.2006
(62) Divisional of application: 01128625.9
(73) Proprietor: MITSUBISHI DENKI KABUSHIKI KAISHA, Chiyoda-ku Tokyo 100-8310 (JP)
(72) Inventor: Hirai, Yasunobu, Chiyoda-ku Tokyo 100-8310 (JP); Takatani, Shiro, Chiyoda-ku Tokyo 100-8310 (JP); Morimoto, Osamu, Chiyoda-ku Tokyo 100-8310 (JP); Kasai, Tomohiko, Chiyoda-ku Tokyo 100-8310 (JP); Kawasaki, Masao, Chiyoda-ku Tokyo 100-8310 (JP); Wakamoto, Shinichi, Chiyoda-ku Tokyo 100-8310 (JP)
(74) Representative: Popp, Eugen

(56) References cited:
- EP-A- 0 704 521
- EP-A- 0 952 407
- EP-A- 1 054 221
- US-A- 5 636 520
- US-A- 5 678 412
- PATENT ABSTRACTS OF JAPAN vol. 2000, no. 08, 6 October 2000 (2000-10-06) -& JP 2000 146369 A (HITACHI LTD), 26 May 2000 (2000-05-26)
- PATENT ABSTRACTS OF JAPAN vol. 1999, no. 01, 29 January 1999 (1999-01-29) -& JP 10 267472 A (MITSUBISHI ELECTRIC CORP), 9 October 1998 (1998-10-09)

## Description

### Background of the Invention

### Field of the Invention

The present invention relates to a refrigeration cycle system that generally uses a refrigerant replaced with a new refrigerant, and a method of replacing the refrigerant.

The present invention relates to, for example, a refrigeration cycle system which originally uses a chlorofluorocarbon (CFC)-based coolant or a hydrochlorofluorocarbon (HCFC)-based coolant and newly replaced by a hydrofluorocarbon (HFC) -based coolant. More particularly, the present invention relates to a refrigeration cycle system which replaces a heat source unit with one using a new HFC-based coolant and which enables use of an existing extension pipe and/or indoor unit, by means of storing in a portion of a coolant circuit a lubricating oil remaining in the existing pipe and/or indoor unit, while performing ordinary freezing/air-conditioning operation and without involvement of special cleaning of the existing extension pipe and/or indoor unit in which CFC-based coolant or HCFC-based coolant has been employed.

### Background Art

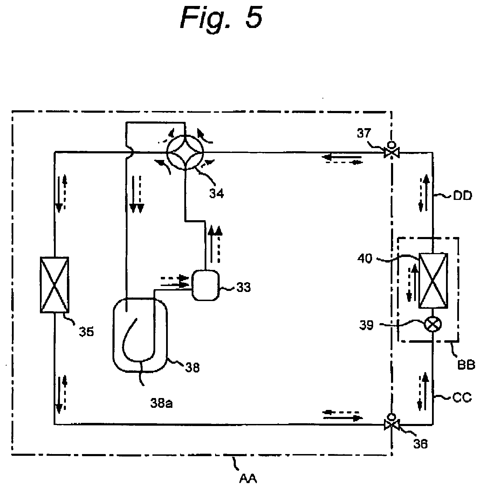

Fig. 5 is a block diagram showing a refrigeration cycle system which has hitherto been in common use. As shown in Fig. 5, reference symbol AA denotes a heat source unit. The heat source uni t AA has built therein a compressor 33, a four-way valve 34, a heat-source-side heat exchanger 35, a first control valve 36, a second control valve 37, and an accumulator 38. Further, reference symbol BB denotes an indoor unit or user machine, and the indoor unit BB has a flow controller 39 and a user-side heat exchanger 40. The heat source unit AA and the indoor unit BB are interconnected by way of a first connection pipe or first extension pipe cc and a second connection pipe or second extension pipe DD, thereby constituting a refrigerating cycle. In the case of an air conditioner, the indoor unit BB may also be referred to as an indoor unit.

One end of the first connection pipe CC is connected to the heat-source-side heat exchanger 35 via the first control valve 36, and the other end of the same is connected to the flow controlled 39. One end of the second connection pipe DD is connected to the four-way valve 34 via the second control valve 37, and the other end of the same is connected to the user-side heat exchanger 40. An oil return hole 38a is formed in a lower part of a U-shaped outflow pipe of the accumulator 38.

Flow of a coolant within the refrigeration cycle system is described by reference to Fig. 5. In Fig. 5, a solid arrow designates flow of a coolant during cooling operation, and a broken arrow designates flow of a coolant during heating operation.

First, flow of a coolant during cooling operation will be described. A high-temperature, high-pressure gas coolant compressed by the compressor 33 flows, via the four-way valve 34, into the heat-source-side heat exchanger 35, where the coolant exchanges heat with a medium, to thereby become condensed and liquefied. The thus condensed-and-liquefied coolant flows into the flow controller 39 via the first control valve 36 and the first connection pipe CC. The coolant is subjected to decompression and then assumes a low-pressure two-phase state. The coolant exchanges heat with a user medium in the user-side heat exchanger 40 to be evaporated and gasified. The evaporated-and-gasified coolant returns to the compressor 33 via the second connection pipe DD, the second control valve 37, the four-way valve 34, and the accumulator 38.

Next will be described flow of a coolant during heating operation. The high-temperature, high-pressure gas coolant compressed by the compressor 33 flows into the user-side heat exchanger 40 via the four-way valve 34, the second control valve 37, and the second connection pipe DD. In the heat exchanger 40, the gas coolant exchanges heat with a user medium, to thereby become condensed and liquefied. The thus-condensed-and-liquefied coolant flows into the flow controller 39, where the coolant is subjected to decompression and then assumes a low-pressure two-phase state. The coolant flows into the heat-source-side heat exchanger 35 via the first connection pipe CC and the first control valve 36, and exchanges heat with a medium in the heat-source-side heat exchanger 35, to thereby become evaporated and gasified. The thus-evaporated-and-gasified coolant returns to the compressor 33 via the four-way valve 34 and the accumulator 38.

Such a refrigeration cycle system has hitherto employed a CFC-based coolant or an HCFC-based coolant. Since these coolants destroy the ozone layer, the coolants have become objects of production control or elimination. A refrigeration cycle system employing an HFC-based coolant as a substitute for these coolants has already been embodied.

When a refrigeration cycle system employing a CFC-based coolant or an HCFC-based coolant becomes dilapidated, there is a necessity of replacing the old system with a new refrigeration cycle system. Here, since the CFC-based coolant or HCFC-based coolant has become an object of elimination or production control, there is a necessity of replacing the old system with a refrigeration cycle system employing a different coolant, such as an HFC-based coolant.

The first connection pipe CC and the second connection pipe DD, which connect the heat source unit AA to the indoor unit BB, and the indoor unit BB have service lives longer than that of the heat source unit AA and do not become dilapidated. Hence, if the first connection pipe CC, the second connection pipe DD, and the indoor unit BB can be used in their present forms, the refrigeration cycle system can be replaced readily and at low cost.

Petrolatum or alkylbenzene oil, which has been employed as lubricating oil, still remains in the first and second connection pipes CC and DD employed in the refrigeration cycle system using the CFC-based coolant or HCFC-based coolant.

If the connection pipes CC and DD are used with a refrigeration cycle system employing, e.g., an HFC-based coolant, while the above-described residues remain in the connection pipes CC and DD, the residual mineral oil or alkylbenzene oil will be mixed with lubricating oil used for the HFC-based coolant. As a result, deterioration of the lubricating oil for the refrigeration cycle system employing the HFC-based coolant is accelerated, thus impairing the reliability of the refrigeration cycle system using the HFC-based coolant.

For these reasons, in order to constitute a refrigeration cycle system employing an HFC-based coolant with use of the existing first and second connection pipes CC and DD and the indoor unit BB, which have been used in the refrigeration cycle systemusing a CFC-based coolant or HCFC-based coolant, the connection pipes CC and DD and the indoor unit BB must be cleaned with a custom-made detergent.

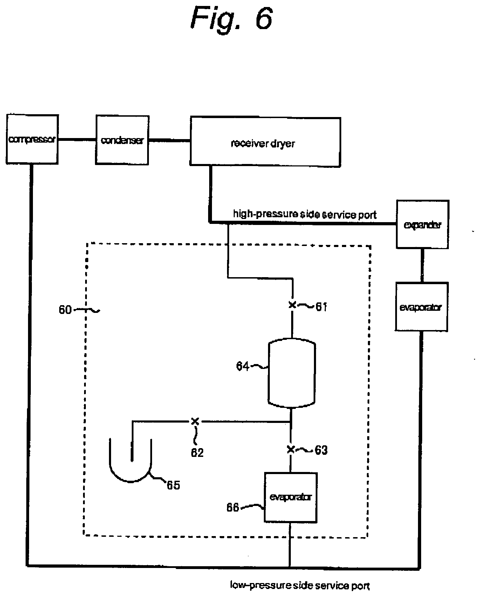

Fig. 6 shows a related-art example of a method of utilizing existing pipes described in Japanese Patent Application Laid-Open No. 249551/1994, wherein mineral oil still remaining in an existing pipe is recovered, thereby rendering the existing pipe available through retrofitting. The primary object of this technique is an automobile air conditioner. In the related-art example, a CFC-based coolant and/or HCFC-based coolant is recovered first. Then, an existing pipe is filled with an HFC-based coolant, and a separating system 60 designated by a broken-line frame is attached to a high-pressure service port and a low-pressure service port. Here, the separating system 60 is constituted of valves 61, 68, and 63; a separator 64; a drain 65; and an evaporator 66. A refrigerating machine is operated while the separating system 60 remains isolated by means of closing the valves 61 and 63. An HFC-based coolant and lubricating oil for HFC-based coolant dissolved in the HFC-based coolant circulate while capturing mineral oil remaining in the existing pipe. After the refrigerating machine has been operated for certain period of time, the valve 61 connected to the separator 64 is opened, thereby conveying, to the separator 64, the HFC-based coolant, the lubricating oil for use therewith, and mineral oil, which are in a whitish, dissolved state. Then, the valve 61 is closed, to thereby cause the HFC-based coolant and the dissolved lubricating oil for use therewith to build up in the lower part of the separator 64 and to thereby cause mineral oil to build up in the upper part of the same. By means of opening the valve 63 connected to the evaporator 66 of the separating system 60 while an operator visually observes the separator 64, the HFC-based coolant and the lubricating oil for use therewith dissolved in the HFC-based coolant are re-charged into the refrigerating machine system via the low-pressure service port while remaining in a gas-liquid mixed state. Next, the valve 63 is closed, and the valve 62 connected to a drain is opened, thereby recovering mineral oil. Those operations are iterated several times, thereby enabling recovery of mineral oil to the outside of the refrigeration cycle and rendering the existing pipe available.

However, the method of cleaning the connection pipes CC and DD with use of a custom-made detergent shown in Fig. 5 is very complex and involves the problem of consumption of much time and the problem of a cleaning operation entailing high cost. When a detergent remains in a pipe, there also arises a problem of deteriorated reliability of the refrigeration cycle system.

According to the retrofitting method shown in Fig. 6, in the case of a short existing pipe such as that employed in an automobile air conditioner, the HFC-based coolant, lubricating oil for use therewith, and lubricating oil for use with a CFC-based or HCFC-based coolant are mixed together as a result of the refrigeration system being operated for short period of time. Further, the concentration of lubricating oil for CFC-based or HCFC-based coolant can be diminished, by means of iteration of cleaning operation several times. In the case of a multi-unit air conditioner employing long extension pipes or a refrigerating machine which imposes to a user loads, such as use of showcases, and constitutes complicated coolant circuitry, the HFC-based coolant, the lubricating oil for use therewith, and the lubricating oil for CFC-based or HCFC-based coolant are not mixed together. Thus, diminishing the concentration of lubricating oil for use with CFC-based or HCFC-based coolant is not easy. Even if the HFC-based coolant, the lubricating oil for use therewith, and the lubricating oil for CFC-based or HCFC-based coolant are completely mixed through long-hour operation, air-conditioning/cooling operation is performed while the lubricating oil for CFC-based or HCFC-based coolant is partially mixed in the HFC-based coolant and the lubricating oil for use therewith until they are completely mixed, thereby posing a possibility of impairing reliability of the refrigerating machine.

Further, the upper liquid level and the lower liquid level in Lhe separator are visually observed, and the lubricating oil for CFC-based or HCFC-based coolant is discharged to the outside of the refrigeration cycle system and recovered. There is a chance of an operator erroneously re-delivering the upper lubricating oil for CFC-based or HCFC-based coolant to the inside of the coolant circuitry. Hence, these operations require experience. Other residual oil recovery systems are known from JP2000146369 and from EP1054221, having similar problems as above-mentioned.

### Summary of the Invention

The present invention according to claim 1 has been conceived to solve the above-mentioned situation.

Other and further objects, features and advantages of the invention will appear more fully from the following description.

### Brief Description of the Drawings

Fig. 1 shows a coolant circuit of a refrigeration cycle system equipped with a lubricating oil storage mechanism according to a first embodiment of the present invention.
Fig. 2 is a schematic diagram showing the configuration of lubricating oil storage apparatus according to the present invention.
Fig. 3 is a schematic diagram showing the configuration of lubricating oil storage apparatus according to a second example, not forming part of the invention.
Fig. 4 is a schematic representation showing the configuration of lubricating oil storage apparatus according to a third example, not forming part of the invention.
Fig. 5 is a block diagram showing a refrigeration cycle system which has hitherto been in common use.
Fig. 6 shows arelated-art example of a method of utilizing existing pipes in a replaced refrigeration cycle system.

### Detailed Description of Preferred Embodiments

### First Embodiment

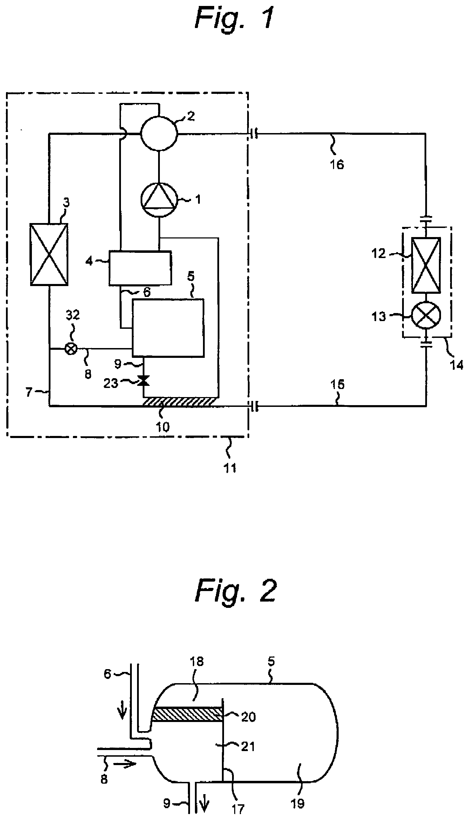

Fig. 1 shows a coolant circuit of a refrigeration cycle system equipped with a lubricating oil storage mechanism according to the present invention. As shown in Fig. 1, reference numeral 1 designates a compressor; 2 designates a four-way valve; 3 designates a heat-source-side heat exchanger; 4 designates an accumulator; and 5A designates lubricating oil storage apparatus. The lower part of the accumulator 4 and the lubricating oil storage apparatus 5A are connected together via a connecting pipe 6 and a valve 22a. The connecting pipe 6 discharges the lubricating oil separated by the accumulator 4 and causes the lubricating oil to flow into the lubricating oil storage apparatus 5A. The lubricating oil storage apparatus 5A is connected to a liquid pipe 7 via a connecting pipe 8 and a flow controller 32. The lubricating oil storage apparatus 5A is also connected to an entrance of the compressor 1 via an outflow pipe 9 and a valve 22b. Reference numeral 10 designates a coolant heat exchanger, and the coolant heat exchanger 10 exchanges heat with a coolant circulating through the outflow pipe 9 and with another coolant circulating through the liquid pipe 7. A lubricating oil storage mechanism 50 is constituted of primarily the lubri eating oil storage apparatus 5A set forth, including the connecting pipes 6 and B, the outflow pipe 9, the valves 22a and 22b, and the flow controller 32, which are connected to the lubricating oil storage apparatus 5A. Further, an outdoor unit 11 is constituted including the compressor 1, the four-way valve 2, the heat-source-side heat exchanger 3, the accumulator 4, and the lubricating oil storage apparatus 5A.

Reference numeral 12 designates a user-side heat exchanger; and 13 designates a flow controller. An indoor unit 14 is constituted including the user-side heat exchanger 12 and the flow controller 13. Moreover, reference numeral 15 designates an extension liquid pipe; and 16 designates an extension gas pipe.

There will now be described cooling operation of a refrigeration cycle system, wherein the cycle system is constituted, by means of using the extension liquid pipe 15, the extension gas pipe 16, and the indoor unit 14-which have been employed in a refrigeration cycle system that uses a first coolant, such as an HCFC-based coolant or a CFC-based coolant-and by means of newly employing the outdoor unit 11, which uses a second coolant, such an HFC-based coolant.

A high-temperature, high-pressure gas coolant output from the compressor 1 flows into the heat-source-side heat exchanger 3 via the four-way valve 2 and dissipates heat in the heat-source-side heat exchanger. The coolant is then condensed and liquefied and flows into the extension liquid pipe 15 via the liquid pipe 7. The first lubricating oil employed in the refrigeration cycle system using an HCFC-based or CFC-based coolant; for example, mineral oil, still remains in the extension liquid pipe 15, the extension gas pipe 16, and the indoor unit 14. A liquid coolant flowing through the extension liquid pipe 15 flows while withdrawing residual mineral oil by means of shear force developing between the liquid coolant and the mineral oil. The liquid coolant flowing through the extension liquid pipe 15 enters the indoor unit 14, where the coolant is evaporated. The coolant also flows into the extension gas pipe 16 while withdrawing the mineral oil remaining in the indoor unit 14. The coolant then flows into the accumulator 4 via the four-way valve 2 while withdrawing the mineral oil remaining in the extension gas pipe 16, and returns to the compressor 1.

During the course of the above operation, the second lubricating oil used along with the HFC-based coolant; more specifically, lubricating oil such as ester oil, is discharged from the compressor 1. The lubricating oil circulates through a coolant pipe along with the HCFC-based coolant, is mixed with the mineral oil remaining in the existing pipe, and flows into the accumulator 4 together with a coolant.

The operation of the refrigeration cycle system during heating operation will next be described. The high-temperature, high-pressure gas coolant discharged from the compressor 1 flows into the extension gas pipe 16 via the four-way valve 2. At this time, the mineral oil remaining in the extension gas pipe 16 flows while being drawn by the gas coolant and enters the user-side heat exchanger 12. Here, the coolant dissipates heat, to thereby become condensed and liquefied. The coolant is subjected to restriction in the flow controlled 13 together with the mineral oil remaining in the user-side heat exchanger 12, thereby entering a low-pressure two-phase state. The low-pressure two-phase coolant and the mineral oil flow through the extension liquid pipe 15 and enter the outdoor unit 11 while withdrawing the mineral oil still remaining in the extension liquid pipe 15. The coolant is evaporated in the heat-source heat exchanger 3, flows into the accumulator 4 via the four-way valve 2, and then returns to the compressor 1.

During the course of the operation set forth, the ester oil that has been drawn from the compressor 1 along with the coolant circulates through the existing coolant pipe, becomes mixed with mineral oil remaining in the existing pipe, and flows into the accumulator 4 in conjunction with the coolant.

The lubricating oil storage apparatus 5A will now be described. The lubricating oil storage apparatus 5A has a structure such as that shown in Fig. 2. The interior of a processing bath 5 is divided into two regions; that is, an isolation region 18 and a storage region 19, by means of a partition plate 17. The partition plate 17 extends to a certain height, and right and left regions within the processing bath 5 are interconnected at a position above the partition plate 17.

In order to store into the coolant circuit the mineral oil recovered from the existing pipe, the mineral oil and the ester oil, which have flowed into the accumulator 4, are led to the isolation region 18 of the lubricating oil storage apparatus 5A via the connecting pipe 6. In addition, the liquid coolant that has been restricted to low pressure by means of the flow controller 32 flows into the isolation region 18 from the connecting pipe B. In the isolation region 18, the mineral oil, the ester oil, and the HFC-based solvent are separated into two phases, in accordance with solubility. A phase of mineral oil of low density is situated in an upper phase 20, and a phase of ester oil and coolant, both of high density, is situated in a lower phase 21. In this state, while the valve 22b remains closed, the mineral oil and ester oil are supplied from the connecting pipe 6 and the liquid coolant is supplied from the connecting pipe 8. As a result, the liquid level of the upper phase 20 and that of the lower phase 21 rise within the isolation region 18. At a point in time at which the liquid level of the upper phase 20 has gone beyond the partition plate 17, the mineral oil of the upper phase 20 flows into the storage region 19.

When the valve 22b is opened, the ester oil and the liquid coolant in the lower phase 21 flow out from the outflow pipe 9, and the liquid level of the lower phase 21 lowers. As a result, the liquid level in the isolation region 18 also lowers. Of the ester oil and the liquid coolant, which have flowed out from the outflow pipe 9, the liquid coolant is evaporated and liquefied in the coolant heat exchanger 10, and the ester oil and gas coolant flow into an inflow pipe of the compressor 1.

Depending on an operating status, a liquid coolant may be present in the accumulator 4. In this case, even if the liquid coolant flows into the isolation region 18 via the connecting pipe 6, the liquid coolant is mixed with another liquid coolant which flows into the isolation region 18 via the connecting pipe 8, thus posing no problem.

When mineral oil and ester oil are consecutively supplied to the isolation region 18 via the connecting pipe 8 while the valve 22b is maintained closed, the liquid level of the upper phase 20 and that of the lower phase 21 rise. As a result, all the upper phase 20 moves to the storage region 19, and eventually the lower phase 21 also moves to the storage region 19. So long as the valve 22b is controlled such that the valve is opened before the lower phase 21 moves to the storage region 19, the lower phase 21 does not move to the storage region 19, thus posing no problem. If the valve 22b remains open, the liquid level of the lower phase 21 lowers and the total amount of the lower phase 21 is diminished. At a point in time when the lower phase 21 has become empty, the upper phase 20 also flows out from the outflow pipe 9. In this case, so long as the valve 22b is controlled such that the valve is closed before the upper phase 20 flows from the outflow pipe 9, no problem arises. As a control measure, a float is situated between the upper phase 20 and the lower phase 21, thereby detecting a boundary surface, and the opening and closing actions of the valve 22b are controlled, thereby posing no problem.

Use of the lubricating oil storage mechanism 50 enables consecutive storage of, into a portion of coolant circuitry, lubricating oil for use with a refrigeration cycle using a CFC-based or HCFC-based coolant, such as mineral oil, remaining in existing extension pipes and an indoor unit while ordinary air-conditioning/cooling operation is performed.

The lubricating oil storage apparatus 5A may be situated at a position detoured from the main coolant circuitry that interconnects the compressor 1, the four-way valve 2, the heat-source-side heat exchanger 3, the flow controller 13, the user-side heat exchanger 12, and the accumulator 4. Lubricating oil for use with a refrigeration cycle using a CFC-based or HCFC-based coolant (simply called a "lubricating oil for CFC or HCFC") can be stably stored without being hampered by a fast flow rate in the main coolant circuitry.

At a point in time when lubricating oil, such as mineral oil, has been recovered sufficiently, the lubricating oil storage mechanism 50 can be isolated by means of closing the valves 22a, 22b, and 32.

After having been collected in a pressure vessel; e.g., an accumulator, the lubricating oil for CFC or HCFC is caused to flow into the lubricating oil storage mechanism 50, thereby enabling control of inflow of lubricating oil to the lubricating oil storage mechanism 50. Consequently, the lubricating oil for CFC or HCFC can be stored stably. Further, if the pressure vessel is disposed toward the front of a compressor inflow pipe, such as a position between an evaporator and the compressor, the lubricating oil for CFC or HCFC still remaining in the existing pipe will not flow into the compressor. Efficient storage of lubricating oil into the lubricating oil storage mechanism 50 as well as an improvement in the reliability of the refrigeration cycle system can be implemented.

In the present example, ester oil has been employed as the second lubricating oil for use with a refrigeration cycle using an HFC-based coolant as a second coolant. Needless to say, the same effect is yielded in a case where ether oil compatible with the HFC-based coolant is used. The second lubricating oil is not limited to the ester and ether oils.

In addition to the HFC-based coolant, a natural coolant, such as HC, ammonia, or carbon dioxide, can also be used as the second coolant.

Moreover, the first coolant can be considered a coolant which has already been used, and the second coolant can be considered an alternative coolant. Alternatively, the first coolant may be called old coolant, and the second coolant new coolant. As yet another alternative, the first coolant may be considered a coolant which imposes a heavy load on the environment, and the second coolant may be considered a coolant which imposes less load on the environment.

### Second Example (not forming part of the invention)

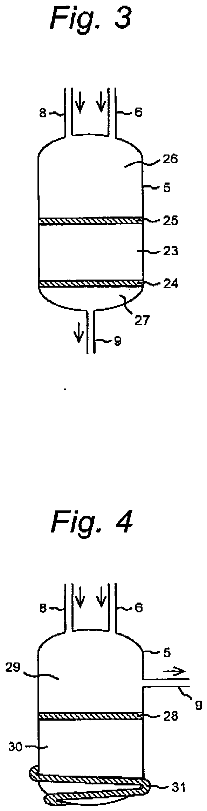

Fig. 3 is a schematic diagram showing the configuration of a lubricating oil storage apparatus according to a second example, not forming part of the invention. In Fig. 3, those elements, which are identical with those shown in Figs. 1 and 2, are assigned the same reference numerals, and their explanations are omitted. As shown in Fig. 3, reference numeral 23 designates activated charcoal for selectively adsorbing a lubricating oil for CFC or HCFC, such as mineral oil; and 24 and 25 designate filters for preventing outflow of the activated charcoal 23, and are made of, for example, sintered metal. Reference numeral 26 designates an upper space in the processing bath 5; and 27 designates a lower space in the processing bath 5.

Another lubricating oil storage apparatus 5B having the foregoing construction is connected in lieu of the lubricating oil storage apparatus 5A shown in Fig. 1, thereby constituting the lubricating oil storage mechanism 50 and the coolant circuitry. The mineral oil and ester oil that have flowed into the lubricating oil storage apparatus 5B from the connecting pipe 6 and the liquid coolant that has flowed into the same from the connecting pipe 8 reach the space 26 in the lubricating oil storage apparatus 5B. The mineral oil, ester oil, and coolant that have flowed into the space 26 pass through the filter 25 and enter the activated charcoal 23. The activated charcoal 23 has a low polarity and selectively attracts and stores mineral oil, which has the lowest polarity from among the mineral oil, the ester oil, and the coolant. The ester oil, which is not adsorbed by the activated charcoal 23, flows into the space 27 via the filter 24 and flows out from the outflow pipe 9. Depending on the operating status, a liquid coolant may be present in the accumulator 4. In this case, even when the liquid coolant has flowed into the space 26 via the connecting pipe 6, the coolant is mixed with another liquid coolant that has flowed into the space 26 via the connecting pipe 8, thus posing no problem.

As mentioned above, mineral oil can be consecutively stored in a portion of the coolant circuitry while ordinary air-conditioning and refrigerating operation are performed, by means of causing mineral oil, ester oil, and a coolant to flow into the lubricating oil storage mechanism 50.

The activated charcoal 23 can eliminate chlorine compounds or sulfur compounds, which have been dissolved into a lubricating oil and are hazardous components, through adsorption.

Mineral oil, ester oil, and a coolant are caused to flow into the lubricating oil storage apparatus 5B according to the present embodiment. Mineral oil can be selectively adsorbed and stored, by means of adsorbing action of activated charcoal without involvement of inflow of a coolant. However, if a coolant is caused to flow into the lubricating oil storage apparatus 5B, the viscosity of a mixture consisting of mineral oil, ester oil, and a coolant in the lubricating oil storage apparatus 5B can be decreased, thereby improving adsorption and storage efficiency.

The lubricating oil storage apparatus 5B can be situated at a position detoured from the main coolant circuitry that interconnects the compressor 1, the four-way valve 2, the heat-source-side heat exchanger 3, the flow controller 13, Lhe user-side heat exchanger 12, and the accumulator 4. Lubricating oil for CFC or HCFC can be stably stored without being hampered by a fast flow rate in the main coolant circuitry.

After having been collected in a pressure vessel; e.g., an accumulator, the lubricating oil for CFC or HCFC is caused to flow into the lubricating oil storage mechanism 50, thereby enabling control of inflow of lubricating oil to the lubricating oil storage mechanism 50. Consequently, the lubricating oil for CFC or HCFC can be stored stably. Further, if the pressure vessel is disposed toward the front of a compressor inflow pipe, such as at a position between an evaporator and the compressor, the lubricating oil for CFC or HCFC still remaining in the existing pipe will not flow into the compressor. Efficient storage of lubricating oil into the lubricating oil storage mechanism 50 as well as an improvement in the reliability of the refrigeration cycle system can be implemented.

In the present example, ester oil has been employed as a lubricating oil for use with a refrigeration cycle using an HFC-based coolant. Needless to say, the same effect is yielded in a case where ether oil having a high polarity is employed.

### Third Example, not forming part of the invention.

Fig. 4 is a schematic representation showing the configuration of a lubricating oil storage apparatus according to a third example, not forming part of the invention. In Fig. 4, those elements, which are identical with those shown in Figs. 1 through 3, are assigned the same reference numerals, and their explanations are omitted. In Fig. 4, reference numeral 28 designates, e.g., an isolation film which enables passage of a substance of a certain molecular size or less; and 31 designates a heater disposed at the bottom of a lubricating oil storage mechanism 5C; 29 designates a space situated above the isolation film 28 in the processing bath 5; and 30 designates a storage region for storing mineral oil situated in a position below the isolation film 28 in the processing bath 5.

Another lubricating oil storage apparatus 5C having the foregoing construction is connected in lieu of the lubricatingoil storage apparatus 5A shown in Fig. 1, thereby constituting the lubricating oil storage mechanism 50 and the coolant circuitry. The mineral oil and ester oil that have flowed into the lubricating oil storage apparatus 5c from the connecting pipe 6 and the liquid coolant that has flowed into the same from the connecting pipe 8 reach the space 29 within the lubricating oil storage apparatus 5C. The main ingredient of mineral oil has a molecular weight of 200 to 600, and the main ingredient of typical ester oil has a molecular weight of about 700 to 800. Therefore, if the isolation film 28 enables passage of an ingredient having a molecular weight of about 650 or less, only mineral oil can pass through the isolation film 28, reach the storing region in the lubricating oil storage apparatus 5C, and accumulate on the bottom under its own weight. Here, the coolant is lighter in molecular weight than the lubricating oil, and hence the coolant passes through the isolation film 28. However, by means of periodically heating the heater 31, only a coolant having a low boiling point is evaporated to pass again through the isolation film 28 and reach the space 29. The ester oil and coolant still remaining in the space 29 flow out from the outflow pipe 9. Depending on an operating status, a liquid coolant may remain in the accumulator 4. In this case, even if a liquid coolant has flowed into the space 29 via the connecting pipe 6, the coolant is mixed with a liquid coolant that has flowed into the space 29 via the connecting pipe 8, thus posing no problem.

As such, mineral oil can be consecutively stored in a part of the coolant circuitry while ordinary air-conditioning and refrigerating operation are performed, by means of causing mineral oil, ester oil, and a coolant to flow into the lubricating oil storage apparatus 5C.

If a degraded lubricating oil and hazardous components of a processing oil used during manufacturing processes are of low molecular weight, the isolation film 28 enables passage of those oils and storage of the oils into the storage region 30.

Mineral oil, ester oil, and a coolant are caused to flow into the lubricating oil storage apparatus 5C according to the present embodiment. Only mineral oil passes through the isolation film without involvement of inflow of a coolant. However, if a coolant is caused to flow into the lubricating oil storage apparatus 5C, the viscosity of a mixture consisting of mineral oil, ester oil, and a coolant in the lubricating oil storage apparatus 5C can be reduced, thereby improving adsorption and storage efficiency.

The lubricating oil storage apparatus 5C is situated in a position detoured from the main coolant circuitry that interconnects the compressor 1, the four-way valve 2, the heat-source-side heat exchanger 3, the flow controller 13, the user-side heat exchanger 12, and the accumulator 4. lubricating oil for CFC or HCFC can be stably stored without being hampered by a fast flow rate in the main coolant circuitry.

After having been collected in a pressure vessel; e.g., an accumulator, the lubricating oil for CFC or HCFC is caused to flow into the lubricating oil storage mechanism 50, thereby enabling control of inflow of lubricating oil to the lubricating oil storage mechanism. Consequently, the lubricating oil for CFC or HCFC can be stored stably. Further, if the pressure vessel is disposed toward the front of a compressor inflow pipe, such as a position between an evaporator and the compressor, the lubricating oil for CFC or HCFC still remaining in the existing pipe will not flow into the compressor. Efficient storage of lubricating oil into the lubricating oil storage mechanism as well as an improvement in the reliability of the refrigeration cycle system can be implemented.

In the present example, ester oil has been employed as a lubricating oil for use with a refrigeration cycle using an HFC-based coolant. Needless to say, the same effect is yielded in a case where other oil having a high polarity is employed.

Now, the features and advantages of the various aspects of the present invention may be summarized as follows. The present invention has been embodied in the foregoing manner, and the following advantages are yielded.

The present invention provides a refrigeration cycle system, wherein extension pipes and/or an indoor unit, employed in a refrigeration cycle system using a first coolant and a first lubricating oil, are used as extension pipes and/or an indoor unit of a replaced refrigeration cycle system using a second coolant and a second lubricating oil. The replaced refrigeration cycle system comprising: a storage apparatus for consecutively storing into a portion of coolant circuitry the first lubricating oil still remaining in the extension pipes and/or the indoor unit, while refrigerating cycle operation is being performed. There is no necessity of cleaning existing extension pipes and/or an indoor unit with use of a custom-made detergent. As a result, elimination of a risk of residual, unwanted detergent as well as curtailing of cleaning costs can be achieved. Thus, the reliability of a refrigeration cycle system is improved. Lubricating oil is consecutively stored while ordinary air-conditioning/refrigerating operation is being performed. Hence, construction of a refrigeration cycle system can be completed by means of replacing an old heat source unit with a new heat source unit. Thus, the existing extension pipes and/or indoor unit can be utilized within a short period of time and at low cost.

Obviously many modifications and variations of the present invention are possible in the light of the above teachings. It is therefore to be understood that within the scope of the appended claim the invention may by practiced otherwise than as specifically described.

## Claims

1. A refrigeration cycle system, using a second coolant and a second lubricating oil in place of a first coolant and a first lubricating oil used previously in the refrigeration cycle system wherein an outdoor unit (11) has been replaced the replacement outdoor unit comprising newly employed components which use the second coolant, said system comprising:
the replacement outdoor unit (11) including a compressor (1), and a heat-source-unit-side heat exchanger (3);
an indoor unit (14) including a user-side heat exchanger (12);
a first pipe (15) interconnecting one end of the outdoor unit (11) to one end of the indoor unit (14);
a second pipe (16) interconnecting the other end of the indoor unit (14) to the other end of the outdoor unit (11);
wherein, the refrigeration cycle system further includes a storage apparatus (5A) situated within the coolant flow path for consecutively storing the first lubricating oil remaining in said first (15) and second pipes (16) and/or said indoor unit (14) while ordinary air conditioning/cooling operation is performed, wherein
the first lubricating oil has a lower density than the second coolant and the second lubricating oil,
**characterised in that**
the storage apparatus (5A) comprises an isolation region (18) and a storage region (19) divided by means of a partition plate (17) which extends from the bottom of the storage apparatus (5A) to a certain height, the partition plate (17) for capturing the first lubricating oil within the storage region (19) by means of the inlet pipework into the storage apparatus (5A) being located through a sidewall of the storage apparatus (5A) into the isolation region (18) and wherein the top of the partition plate (17) is higher than an inlet position of the second coolant, and
wherein the outflow pipe (9) extends from the lower side of the isolation region (18), thus separating and storing the first lubricating oil in the storage region (19).

## Patentansprüche

1. Kühlkreislaufsystem, das ein zweites Kühlmittel und ein zweites Schmieröl anstelle eines zuvor im Kühlkreislaufsystem verwendeten ersten Kühlmittels und ersten Schmieröls verwendet, bei dem eine gebäudeexterne Einheit (11) ausgetauscht wurde, wobei die gebäudeexterne Austauscheinheit neu verwendetet Bestandteile umfasst, die das zweite Kühlmittel verwenden, wobei das System umfasst:
die gebäudeexterne Austauscheinheit (11) mit einem Kompressor (1), und einen wärmequellenseitigen Wärmetauscher (3);
eine gebäudeinterne Einheit (14) mit einem benutzerseitigen Wärmetauscher (12);
ein erstes Rohr (15), das ein Ende der gebäudeexternen Einheit (11) mit einem Ende der gebäudeinternen Einheit (14) verbindet;
ein zweites Rohr (16), das das andere Ende der gebäudeinternen Einheit (14) mit dem anderen Ende der gebäudeexternen Einheit (11) verbindet;
wobei das Kühlkreislaufsystem darüber hinaus eine Speichervorrichtung (5A) umfasst, die sich im Kühlmittelströmungsweg befindet, um fortlaufend das erste Schmieröl zu speichern, das im ersten Rohr (15) und zweiten Rohr (16) und/oder der gebäudeinternen Einheit (14) verblieben ist, während ein gewöhnlicher Klimatisierungs-/Kühlbetrieb erfolgt, wobei
das erste Schmieröl einer niedrigere Dichte als das zweite Kühlmittel und das zweite Schmieröl hat,
**dadurch gekennzeichnet, dass**
die Speichervorrichtung (5A) einen Abscheidungsbereich (18) und einen Speicherbereich (19) umfasst, die durch eine Trennplatte (17) unterteilt sind, welche sich vom Boden der Speichervorrichtung (5A) bis zu einer bestimmten Höhe erstreckt, wobei die Trennplatte (17) das erste Schmieröl innerhalb des Speicherbereichs (19) mittels der Einlass-Verrohrung in die Speichervorrichtung (5A) einfängt, welche sich über eine Seitenwand von der Speichervorrichtung (5A) in den Abscheidungsbereich (18) erstreckt, und wobei die Oberseite von der Trennplatte (17) höher ist als eine Einlass-Position von dem zweiten Kühlmittel, und
wobei sich das Ablaufrohr (9) von der unteren Seite von dem Abscheidungsbereich (18) erstreckt, wodurch das erste Schmieröl im Speicherbereich (19) abgeschieden und gespeichert wird.

## Revendications

1. Système à cycle de réfrigération, utilisant un deuxième agent refroidisseur et une deuxième huile de lubrification à la place d'un premier agent refroidisseur et d'une première huile de lubrification utilisés préalablement dans le système à cycle de réfrigération, où une unité extérieure (11) a été remplacée, l'unité extérieure de remplacement comprenant des composants nouvellement employés qui utilisent le deuxième agent refroidisseur, ledit système comprenant :
l'unité extérieure de remplacement (11) incluant un compresseur (1), et un échangeur de chaleur côté unité formant source de chaleur (3) ;
une unité intérieure (14) incluant un échangeur de chaleur côté utilisateur (12) ;
un premier tuyau (15) reliant une extrémité de l'unité extérieure (11) à une extrémité de l'unité intérieure (14) ;
un deuxième tuyau (16) reliant l'autre extrémité de l'unité intérieure (14) à l'autre extrémité de l'unité extérieure (11) ;
dans lequel le système à cycle de réfrigération comprend en outre un appareil de stockage (5A) situé dans le chemin d'écoulement de l'agent refroidisseur pour stocker consécutivement la première huile de lubrification qui subsiste dans ledit premier (15) et ledit deuxième tuyau (16) et/ou dans ladite unité intérieure (14) pendant qu'une opération habituelle de conditionnement d'air/refroidissement est exécutée, dans lequel la première huile de lubrification a une densité plus faible que le second agent refroidisseur et la deuxième huile de lubrification,
**caractérisé en ce que**
l'appareil de stockage (5A) comprend une région d'isolation (18) et une région de stockage (19) divisées au moyen d'une plaque de cloisonnement (17) qui s'étend depuis le fond de l'appareil de stockage (5A) jusqu'à une certaine hauteur, la plaque de cloisonnement (17) étant destinée à capturer la première huile de lubrification à l'intérieur de la région de stockage (19) au moyen de la tubulure d'entrée jusque dans l'appareil de stockage (5A) qui est situé à travers une paroi latérale de l'appareil de stockage (5A) jusque dans la région d'isolation (18), et dans lequel le sommet de la plaque de cloisonnement (17) est plus haut qu'une position d'entrée du second agent refroidisseur, et
dans lequel le tube d'écoulement sortant (9) s'étend depuis le côté inférieur de la région d'isolation (18), et en séparant et en stockant ainsi la première huile de lubrification dans la région de stockage (19).
